# EUROPÄISCHE PATENTANMELDUNG

(11) **EP 1 117 166 A1**
(43) Veröffentlichungstag der Anmeldung: **18.07.2001**
(21) Anmeldenummer: 00126653.5
(22) Anmeldetag: 05.12.2000
(51) Int. Cl.: H02G 5/02, H02B 1/20

(54) **Vorrichtung zum Befestigen einer Tragschiene an Rahmenschenkeln eines Schaltschrank-Rahmengestelles**

(30) Priorität: 14.01.2000 DE 10001185
(71) Anmelder: Rittal Rudolf Loh GmbH & Co. KG, 35745 Herborn (DE)
(72) Erfinder: Zachrai, Jürgen, 35690 Dillenburg (DE); Wagener, Hans, 35716 Dietzhölztal 2 (DE)
(74) Vertreter: Fleck, Hermann-Josef, Dr.-Ing.

(57) **Zusammenfassung**

Die Erfindung betrifft eine Vorrichtung zum Befestigen einer Tragschiene an Rahmenschenkeln eines Schaltschrank-Rahmengestelles, wobei die Rahmenschenkel zwei senkrecht zueinander stehende Befestigungsseiten mit jeweils einer Reihe von quadratischen Befestigungsdurchbrüchen aufweisen, wobei die Tragschiene an beiden Enden mit Befestigungslaschen versehen sind, die mindestens einen Einhängehaken aufweisen, welche an den Querschnitt der Befestigungsdurchbrüche in der ersten Befestigungsseite der Rahmenschenkel im Abstand zwischen den Befestigungslaschen auf die Teilung der Befestigungsdurchbrüche der Rahmenschenkel angepasst sind, wobei jeder Befestigungslasche der Tragschiene eine Spannplatte zugeordnet ist, die mit Haltekrallen versehen sind und mit diesen Befestigungsdurchbrüche in den zweiten Befestigungsseiten der Rahmenschenkel hintergreifen und wobei die Spannplatten mit einer Gewindeaufnahme für eine Spannschraube versehen sind, mit der sie in einem in Längsrichtung der Tragschiene verlaufenden Langloch an der Tragschiene gehalten und mit dieser verspannbar sind. Mit spezieller Ausbildung der Tragschiene und besonderen Befestigungsteilen lässt sich die Tragschiene als Sammelschienenhalter eines Sammelschienensystems verwenden.

## Beschreibung

Die Erfindung betrifft eine Vorrichtung zum Befestigen einer Tragschiene an Rahmenschenkeln eines Schaltschrank-Rahmengestelles, wobei die Rahmenschenkel zwei senkrecht zueinander stehende Befestigungsseiten mit jeweils einer Reihe von quadratischen Befestigungsdurchbrüchen aufweisen, wobei die Tragschiene an beiden Enden mit Befestigungslaschen versehen sind, die mindestens einen Einhängehaken aufweisen, welche an den Querschnitt der Befestigungsdurchbrüche in der ersten Befestigungsseite der Rahmenschenkel im Abstand zwischen den Befestigungslaschen auf die Teilung der Befestigungsdurchbrüche der Rahmenschenkel angepasst sind, wobei jeder Befestigungslasche der Tragschiene eine Spannplatte zugeordnet ist, die mit Haltekrallen versehen sind und mit diesen Befestigungsdurchbrüche in den zweiten Befestigungsseiten der Rahmenschenkel hintergreifen und wobei die Spannplatten mit einer Gewindeaufnahme für eine Spannschraube versehen sind, mit der sie in einem in Längsrichtung der Tragschiene verlaufenden Langloch an der Tragschiene gehalten und mit dieser verspannbar sind.

Eine Vorrichtung dieser Art ist durch die DE 197 12 362 C1 bekannt und dient dazu, die Tragschiene schnell und stabil mit den Rahmenschenkeln des Schaltschrank-Rahmengestelles zu verbinden.

Die mit den Einhängehaken versehene Tragschiene kann in Befestigungsdurchbrüche der Rahmenschenkel und Montageplatlten vorbereitend eingehängt werden, so dass der Monteur für die weiteren Montagearbeiten beide Hände frei hat. Die mit den Spannschrauben an der Tragschiene gehaltenen Spannplatten werden dann ebenfalls in Befestigungsdurchbrüche des Rahmenschenkels eingeführt oder hinter den Haltesteg der Montageplatte gebracht.

Die Langlöcher in der Tragschiene lassen die Verstellung der Spannplatten an den Enden der Tragschiene zu. Werden die Spannschrauben angezogen, dann werden die Tragschiene und die Spannplatten gegeneinander verspannt, wobei die Tragschiene auf einer Befestigungsseite des Rahmenschenkels aufliegt und die Spannplatten mit ihren Haltekrallen in den Befestigungsdurchbrüchen der senkrecht dazu stehenden Befestigungsseite angreifen. Der Basisschenkel der Tragschiene ist in Längsrichtung mit Befestigungsbohrungen versehen, die zur
Anbringung von Geräten an der Tragschiene verwendbar sind. Die Tragschiene ist jedoch nicht optimal zum Befestigen von Stromsammelschienen eines Sammelschienensystems geeignet und dabei nicht an die besonderen Anforderungen eines Sammelschienenhalters angepasst, um deren Montage zu erleichtern.

Es ist Aufgabe der Erfindung, eine Vorrichtung der eingangs erwähnten Art so zu erweitern, dass die Tragschiene mit einfachen Mitteln die Anforderungen eines Sammelschienenhalters erfüllt und die Montage der Stromsammelschienen eines Sammelschienensystems erleichtert.

Diese Aufgabe wird nach der Erfindung dadurch gelöst, dass die Vorrichtung als Sammelschienenhalter pro Stromsammelschiene ein Paar von Gewindeaufnahmen aufweist, in die Haltebolzen mit im Durchmesser reduziertem Gewindeteil einschraubbar sind, dass mit den Haltebolzen U-förmige Isolations-Aufnahmen an der Tragschiene festlegbar sind, deren Aufnahme an die Außenabmessungen der Stromsammelschienen angepasst sind, und dass der Isolations-Aufnahmebügel mit einem Haltesteg verschließbar sind, wobei die Verbindungsschrauben in stirnseitige Schraubenaufnahmen der Haltebolzen einschraubbar sind.

Die Paare von Gewindeaufnahmen sind im Abstand zueinander und im Abstand zwischen den Paaren schon auf die vorgeschriebene Anordnung der parallel zueinander verlaufenden Stromsammelschienen des Sammelschienensystems abgestimmt. Die Isolations-Aufnahmebügel bilden mit der Tragschiene verbunden offene Aufnahmen, in die die Stromsammelschienen entsprechender Außenabmessungen einbringbar sind. Gehalten werden die Stromsammelschienen in den Isolations-Aufnahmebügeln mittels Haltestegen, die die freien Enden der Seitenschenkel der Isolations-Aufnahmebügel miteinander verbinden, die Aufnahme verschließen und die eingebrachte Stromsammelschiene in der Aufnahme festlegen.

Ist nach einer Ausgestaltung vorgesehen, dass die Tragschiene mit einem Basisschenkel und zwei Seitenschenkeln im Querschnitt U-förmig ausgebildet ist und dass die Spannplatten mit Basisschenkel und zwei Seitenschenkeln ebenfalls U-förmig ausgebildet ist und eine Aufnahme für die Tragschiene bilden, dann hat die Tragschiene ausreichende Stabilität, um auch schwere Stromsammelschienen tragen zu können, und die Spannplatten sind auf der Tragschiene in Längsrichtung leicht verstellbar, um in ihre Verbindungsstellung mit den Rahmenschenkeln gebracht zu werden.

Die Verbindung der Isolations-Aufnahmebügel mit den Paaren von Gewindeaufnahmen der Tragschiene wird dadurch erleichtert, dass die Isolations-Aufnahmebügel in den Seitenschenkeln im Durchmesser abgesetzte und an die abgesetzten Haltebolzen angepasste Bohrungen aufweisen.

Da bei Sammelschienensystemen für hohe Stromstärken mehr und mehr Stromsammelschienen mit im Wesentlichen quadratischen Außenabmessungen eingesetzt werden, sieht eine Ausgestaltung vor, dass die Aufnahme der Isolations-Aufnahmebügel an die quadratischen Außenabmessungen der aufzunehmenden Stromsammelschiene angepasst ist, wobei die Auslegung so ist, dass die Paare von Gewindeaufnahmen der Tragschiene an den Abstand der parallelen Stromsammelschienen eines mehrphasigen Sammelschienensystems angepasst sind.

Das Einhängen der Tragschiene an den Rahmenschenkeln wird dadurch erleichtert, dass die Haltekrallen der Spannplatte an einer senkrecht zu der Längsrichtung der Tragschiene verlaufenden Kante der Spannplatte angeformt sind, sowie dass die Befestigungsseiten der Rahmenschenkel quer zur Längsrichtung der Tragschiene ausgerichtet sind, wobei durch die Ausrichtung der Haltekrallen und der Rahmenschenkel gleich die Richtung für das Einhängen der Tragschiene vorgegeben wird.

Tragschiene und Spannplatten sind vorteilhafterweise als getrennte Stanz-Biegeteile ausgebildet und hergestellt.

Nach einer weiteren Ausgestaltung ist vorgesehen, dass die Isolations-Aufnahmebügel aus einer Basisplatte und zwei Seitenschenkeln zusammengesetzt oder einstückig ausgebildet sind. Basisplatte und Seitenschenkel sind stets aus Isoliermaterial, z.B. Kunststoff, hergestellt, um die in die Aufnahme des Isolations-Aufnahmebügels eingebrachte Stromsammelschiene gegenüber der Tragschiene aus Metall zu isolieren.

Bei getrennten Teilen - Basisplatte und Seitenschenkel - der Isolations-Aufnahmebügel ist für die Anbringung dieser Teile an der Tragschiene von Vorteil, wenn die Ausgestaltung so ist, dass die Basisplatte mit Endaussparungen versehen ist, die die Seitenschenkel aufnehmen und positionieren, und dass die Basisplatte selbst mit Positionierschenkeln versehen ist, die im Abstand zu den Seitenschenkeln stehen und eine Aufnahme für die Seitenschenkel der Tragschiene begrenzen, sowie dass der Haltesteg seitlich abstehende Positionierstege aufweisen, die Anschläge für die Seitenstützen des Isolations-Aufnahmebügels bilden.

Nach einer Weiterbildung kann vorgesehen sein, dass die Rahmenschenkel durch Montageschienen ersetzbar sind, deren zweite Befestigungsseite als Haltesteg ausgebildet ist, und dass die Haltekrallen der Spannplatten diesen Haltesteg hintergreifen, da die Montageschienen in der Regel nur im Basisschenkel Reihen von Befestigungsdurchbrüche tragen. Mit den Montageschienen können Verbindungsstellen im Schaltschrank geschaffen werden, auch wenn die parallel verlaufenden Rahmenschenkel einen größeren Abstand zueinander aufweisen wie die Befestigungslaschen der Tragschiene. Die Montageschienen lassen sich mit den Rahmenschenkeln des Schaltschrank-Rahmengestelles verbinden.

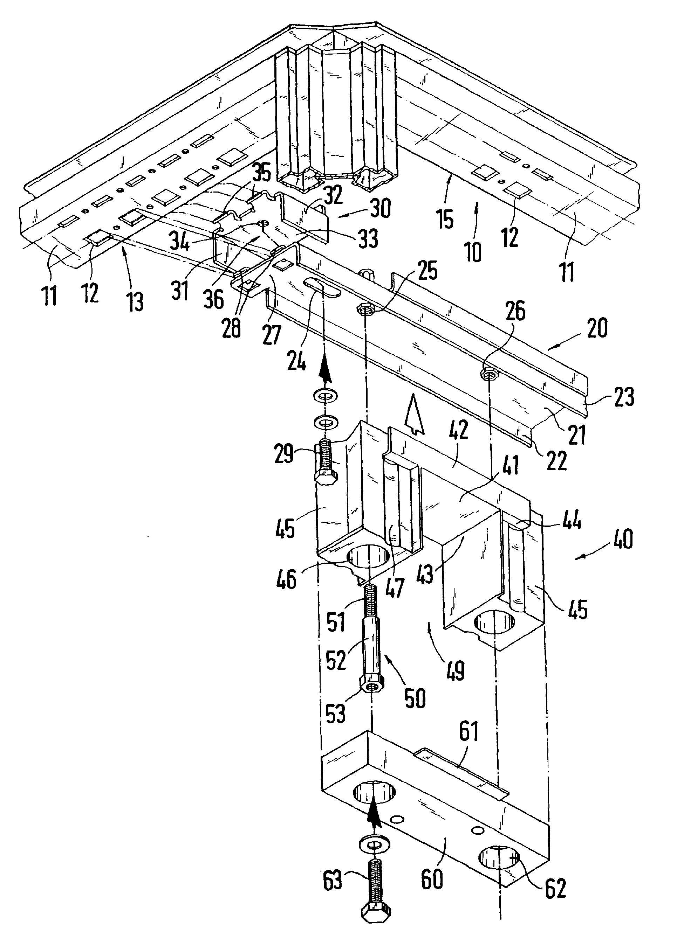

Die Erfindung wird anhand eines in der Zeichnung dargestellten Ausführungsbeispiels näher erläutert.

Im oberen Teil der Zeichnung sind drei im rechten Winkel aufeinander stoßende Rahmenschenkel 10 eines Schaltschrank-Rahmengestelles gezeigt, wobei z.B. der linke, horizontal verlaufende Rahmenschenkel der Rückseite des Schaltschrankes zugekehrt ist und der rechte horizontale Rahmenschenkel zur Vorderseite des Schaltschrankes gerichtet ist. Eine Tragschiene 20 als Sammelschienenhalter wird ebenfalls zur Vorderseite gerichtet mit dem Rahmengestell verbunden, so dass die mit der Tragschiene 20 zu verbindenden Stromsammelschienen parallel zur Rückseite verlaufen und in einer horizontalen Ebene auf vorgeschriebenem Abstand angeordnet sind.

Die Rahmenschenkel 10 weisen eine erste horizontale Befestigungsseite 11 und eine angrenzende, vertikale zweite Befestigungsseite 13 auf. Beide Befestigungsseiten 11 und 13 sind mit einer Reihe von quadratischen Befestigungsdurchbrüchen 12 versehen, die aufeinander ausgerichtet und in gleichem Abstand zu der durch die Befestigungsseiten 11 und 13 gebildeten Innenkante 15 der Rahmenschenkel 10 verlaufen.

Die Tragschiene 20 ist mit Basisschenkel 21 und den beiden Seitenschenkeln 22 und 23 U-förmig gestaltet und ausreichend stabil. Sie kann zudem mit einer Verstärkungsschiene auf der Tragschienen-Außenseite verstärkt werden. Die Tragschiene 20 läuft an ihren Enden in Befestigungslappen 27 aus, in denen zwei Haken 28 ausgestanzt und ausgebogen sind. Die als Einhängehaken ausgebildeten Haken 28 sind quer zur Längsrichtung der Tragschiene 20 ausgerichtet und in ihrer Breite auf die Seitenlänge der quadratischen Befestigungsdurchbrüche 12 abgestimmt, so dass sie leicht in diese einführbar sind, wobei die Ausrichtung der Haken 28 die Einhängerichtung vorgeben. Auf den Befestigungslaschen 27 der Tragschiene 20 sind U-förmige Spannplatten 30 begrenzt verschiebbar, wobei die durch ein Langloch 24 der Tragschiene 20 geführte Spannschraube 29 in eine Gewindeaufnahme 34 im Basisschenkel 33 der Spannplatte 30 eingeschraubt ist. Ist die Tragschiene 20 an den Rahmenschenkeln 10 eingehängt, dann werden die Spannplatten 30 in Richtung zu den Rahmenschenkeln 10 verschoben. Dabei werden die Haltekrallen 35 der Spannplatten 30 in Befestigungsdurchbrüche 12 der vertikalen Befestigungsseiten 13 eingeführt. Die Spannschrauben 29 werden angezogen und die Spannplatten 30 mit den Rahmenschenkeln 10 und der Tragschiene 20 verspannt. Die Spannplatten 30 mit Basisschenkel 33 und den beiden Seitenschenkeln 31 und 32 bilden eine U-förmige Aufnahme 36, die die U-förmigen Befestigungsenden der Tragschiene 20 umschließen. Ist eine Montageschiene nötig, da die Tragschiene 20 kürzer ist als der Abstand zum vorderen Rahmenschenkel 10, dann hintergreifen die Haltekrallen 35 der zugeordneten Spannplatte 30 den Haltesteg der Montageschiene, da dieser keine Befestigungsdurchbrüche 12 wie die Rahmenschenkel 10 aufweisen. Die Montageschienen tragen nur im Basisschenkel Reihen von Befestigungsdurchbrüche 12, die von den Einhängehaken 27 der Tragschiene 20 belegt werden können.

Der Basisschenkel 21 der Tragschiene 20 trägt pro Stromsammelschiene des Sammelschienensystems ein Paar von Gewindeaufnahmen 25 und 26, die schon den Abstand zwischen den Stromsammelschienen berücksichtigen und selbst einen Abstand aufweisen, der an die Befestigung eines Isolations-Aufnahmebügels 40 für die zugeordnete Stromsammelschiene angepasst ist. Die Gewindeaufnahmen 25 und 26 können z.B. durch eingesetzte Gewindebuchsen gebildet sein. Die Isolations-Aufnahmebügel 40 weisen eine Basisplatte 41 und zwei Seitenschenkel 45 auf, die eine offene Aufnahme 49 bilden, die an die Außenabmessungen der einzubringenden Stromsammelschiene angepasst ist. Dabei können die Basisplatte 41 und die Seitenschenkel 45 getrennte Teile bilden oder einstückig zusammengefasst sein. In jedem Fall bestehen sie aus Isoliermaterial, z.B. Kunststoff. Der Basisschenkel 41 weist an den Enden Aussparungen 43 auf, die die Seitenschenkel 45 aufnehmen und positionieren, wobei Teile 44 des Basisschenkels 41 mit Positionieraufnahmen 47 der Seitenschenkel 45 in Eingriff kommen, wenn es sich um einen zusammengesetzten Isolations-Aufnahmebügel 40 handelt.

Zudem sind an den Längsseiten des Basisschenkels 44 Positionier-Schenkel 42 angeformt, die zu den Seitenschenkeln 45 hin eine Aufnahme für die Seitenschenkel 22 und 23 der Tragschiene 20 bilden und diese im Bereich der eingebrachten Stromsammelschiene abdecken.

Die Seitenschenkel 45 des Isolations-Aufnahmebügels 40 tragen durchgehende, im Durchmesser abgesetzte Bohrungen 46 für Haltebolzen 50. Diese Haltebolzen 50 enden in Gewindeteile 51, die in die Gewindeaufnahmen 25 und 26 der Tragschiene 20 einschraubbar sind. Dabei stützen sich die zylindrischen Abschnitte 52 der Haltebolzen 50 an Absätzen der Bohrungen 46 der Seitenschenkel 45 ab, so dass der Isolations-Aufnahmebügel 40 an der Tragschiene 20 festgeschraubt werden kann. Über die Bohrungen 46 sind die stirnseitigen Schraubenaufnahmen 53 der Haltebolzen 50 zugänglich, in die Verbindungsschrauben 63 einschraubbar sind, welche einen Haltesteg 60 mit den Seitenschenkeln 45 des Isolations-Aufnahmebügels 40 verbinden und die eingebrachte Stromsammelschiene in der nun geschlossenen Aufnahme 49 festlegen. Dabei können Positionierstege 61 das Anbringen des Haltesteges 60 erleichtern.

Die Basisplatte 41 des Isolations-Aufnahmebügels 40 kann auch zwischen die bereits mit der Tragschiene 20 verbundenen Seitenschenkel 45 eingeführt werden, wobei die Teile 44 der Basisplatte 41 in den Positioniernuten 47 der Seitenschenkel 45 geführt ist und die Basisplatte 41 durch die eingebrachte Stromsammelschiene an der Tragschiene 20 anliegend gehalten wird.

## Patentansprüche

1. Vorrichtung zum Befestigen einer Tragschiene an Rahmenschenkeln eines Schaltschrank-Rahmengestelles, wobei die Rahmenschenkel zwei senkrecht zueinander stehende Befestigungsseiten mit jeweils einer Reihe von quadratischen Befestigungsdurchbrüchen aufweisen, wobei die Tragschiene an beiden Enden mit Befestigungslaschen versehen sind, die mindestens einen Einhängehaken aufweisen, welche an den Querschnitt der Befestigungsdurchbrüche in der ersten Befestigungsseite der Rahmenschenkel im Abstand zwischen den Befestigungslaschen auf die Teilung der Befestigungsdurchbrüche der Rahmenschenkel angepasst sind, wobei jeder Befestigungslasche der Tragschiene eine Spannplatte zugeordnet ist, die mit Haltekrallen versehen sind und mit diesen Befestigungsdurchbrüche in den zweiten Befestigungsseiten der Rahmenschenkel hintergreifen und wobei die Spannplatten mit einer Gewindeaufnahme für eine Spannschraube versehen sind, mit der sie in einem in Längsrichtung der Tragschiene verlaufenden Langloch an der Tragschiene gehalten und mit dieser verspannbar sind,
dadurch gekennzeichnet,
dass sie als Sammelschienenhalter pro Stromsammelschiene ein Paar von Gewindeaufnahmen (25, 26) aufweist, in die Haltebolzen (50) mit im Durchmesser reduziertem Gewindeteil (51) einschraubbar sind,
dass mit den Haltebolzen (50) U-förmige Isolations-Aufnahmen (40) an der Tragschiene (20) festlegbar sind, deren Aufnahme (49) an die Außenabmessungen der Stromsammelschienen angepasst sind, und
dass der Isolations-Aufnahmebügel (40) mit einem Haltesteg (60) verschließbar sind, wobei die Verbindungsschrauben (63) in stirnseitige Schraubenaufnahmen (52) der Haltebolzen (50) einschraubbar sind.

2. Vorrichtung nach Anspruch 1,
dadurch gekennzeichnet,
dass die Tragschiene (20) mit einem Basisschenkel (21) und zwei Seitenschenkeln (22, 23) im Querschnitt U-förmig ausgebildet ist und
dass die Spannplatten (30) mit Basisschenkel (33) und zwei Seitenschenkeln (31, 32) ebenfalls U-förmig ausgebildet ist und eine Aufnahme (36) für die Tragschiene (20) bilden.

3. Vorrichtung nach Anspruch 1 oder 2,
dadurch gekennzeichnet,
dass die Isolations-Aufnahmebügel (40) in den Seitenschenkeln (45) im Durchmesser abgesetzte und an die abgesetzten Haltebolzen (50) angepasste Bohrungen (46) aufweisen.

4. Vorrichtung nach einem der Ansprüche 1 bis 3,
dadurch gekennzeichnet,
dass die Aufnahme (49) der Isolations-Aufnahmebügel (40) an die quadratischen Außenabmessungen der aufzunehmenden Stromsammelschiene angepasst ist.

5. Vorrichtung nach einem der Ansprüche 1 bis 4,
dadurch gekennzeichnet,
dass die Paare von Gewindeaufnahmen (25, 26) der Tragschiene (20) an den Abstand der parallelen Stromsammelschienen eines mehrphasigen Sammelschienensystems angepasst sind.

6. Vorrichtung nach einem der Ansprüche 1 bis 5,
dadurch gekennzeichnet,
dass die Haltekrallen (35) der Spannplatte (30) an einer senkrecht zu der Längsrichtung der Tragschiene (20) verlaufenden Kante der Spannplatte (30) angeformt sind.

7. Vorrichtung nach einem der Ansprüche 1 bis 6,
dadurch gekennzeichnet,
dass die Tragschiene (20) und die Spannplatten (30) als getrennte Stanz-Biegeteile ausgebildet und hergestellt sind.

8. Vorrichtung nach einem der Ansprüche 1 bis 7,
dadurch gekennzeichnet,
dass die Isolations-Aufnahmebügel (40) aus einer Basisplatte (41) und zwei Seitenschenkeln (45) zusammengesetzt oder einstückig ausgebildet sind.

9. Vorrichtung nach Anspruch 8,
dadurch gekennzeichnet,
dass die Basisplatte (41) mit Endaussparungen (43) versehen ist, die die Seitenschenkeln (45) aufnehmen und positionieren.

10. Vorrichtung nach Anspruch 8 und 9,
dadurch gekennzeichnet,
dass die Basisplatte (41) selbst mit Positionierschenkeln (42) versehen ist, die im Abstand zu den Seitenschenkeln (45) stehen und eine Aufnahme für die Seitenschenkel (22, 23) der Tragschiene (20) begrenzen.

11. Vorrichtung nach einem der Ansprüche 1 bis 10,
dadurch gekennzeichnet,
dass der Haltesteg (60) seitlich abstehende Positionierstege (61) aufweisen, die Anschläge für die Seitenstützen (45) des Isolations-Aufnahmebügels (40) bilden.

12. Vorrichtung nach einem der Ansprüche 1 bis 11,
dadurch gekennzeichnet,
dass die Befestigungsseiten (11, 13) der Rahmenschenkel (10) quer zur Längsrichtung der Tragschiene (20) ausgerichtet sind.

13. Vorrichtung nach einem der Ansprüche 1 bis 12,
dadurch gekennzeichnet,
dass die Rahmenschenkel (10) durch Montageschienen ersetzbar sind, deren zweite Befestigungsseite als Haltesteg ausgebildet ist, und
dass die Haltekrallen (35) der Spannplatten (30) diesen Haltesteg hintergreifen.
